# FASCICULE DE BREVET EUROPEEN

(11) **EP 3 380 035 B1**
(45) Date de publication et mention de la délivrance du brevet: **23.12.2020**
(21) Numéro de dépôt: 16813088.8
(22) Date de dépôt: 25.11.2016
(51) Int. Cl.: A61C 3/02, A61C 8/00, A61C 1/08

(54) **FRAISE POUR OS CORTICAL DE MÂCHOIRE.**
BOHRER FÜR KORTIKALEN KNOCHEN DES KIEFERKNOCHENS
DRILL FOR CORTICAL BONE OF THE JAWBONE.

(30) Priorité: 25.11.2015 FR 1502468
(43) Date de publication de la demande: 03.10.2018
(73) Titulaire: Global D, 69530 Brignais (FR)
(72) Inventeur: CASIMIRO, Roméo, 69230 Saint Genis Laval (FR); CLEMENT, Didier, 69008 Lyon (FR)
(74) Mandataire: Benech, Frédéric
(86) Numéro de dépôt international: PCT/FR2016/053106
(87) Numéro de publication internationale: WO 2017/089732

(56) Documents cités:
- EP-A1- 1 402 843
- EP-A1- 2 145 600
- DE-A1-102005 032 933
- US-A- 5 782 636
- US-A1- 2012 028 215
- US-E1- R E38 630

## Description

La présente invention concerne une fraise pour partie corticale osseuse de mâchoire comprenant un corps allongé autour d'un axe comportant une portion à arêtes hélicoïdales coupantes d'attaque de la portion crestale de la mâchoire.

Elle concerne également un ensemble formé d'une telle fraise et d'au moins un implant dentaire associé.

DE102005032933 décrit un ensemble formé d'une fraise et d'un implant.

Elle trouve une application particulièrement importante bien que non exclusive dans le domaine de la chirurgie dentaire de reconstitution utilisant des implants dont la face supérieure se situe en dessous de la portion crestale de la machoire.

On sait que lorsqu'un chirurgien met en place un implant dentaire et le pilier associé il peut exister un décalage de position entre la crête osseuse et la tête de l'implant.

Si l'on souhaite alors installer un système prothétique ou de cicatrisation plus large que la cavité laissée par le passage de l'implant et/ou un système de cicatrisation plus étroit, il est alors nécessaire d'agrandir la cavité osseuse entre crête et implant.

Pour ce faire, ce qui sous-entend que l'implant est en place et situé sous la crête osseuse, le chirurgien érode en partie la portion crestale de l'os de la mâchoire concernée existante au niveau de l'implant installé en utilisant une fraise dite à os cortical.

De telles fraises présentent cependant des inconvénients.

En effet, la fraise peut ne pas être exactement centrée par rapport à l'implant et l'attaque de la crête ne sera donc pas tout à fait adaptée au positionnement ultérieur du pilier.

Un autre inconvénient provient du risque de heurter avec la fraise l'implant déjà en place, ce qui peut l'endommager et/ou le fragiliser notamment à cause de vibrations.

De tels inconvénients ne sont pas perceptibles et/ou en général pris en compte par le praticien au moment de son intervention.

Il en résulte un endommagement caché allant parfois jusqu'à la perte à terme de l'implant.

On connait également (DE 10 2005 032933) un procédé pour la reconstitution osseuse de zones péri-implantaires abimées du fait d'infections bactériennes sur la surface de l'implant.

Ce document décrit le préambule de la revendication 1.

Pour ce faire, les parties endommagées des tissus humains autour de l'implant sont découpées ou broyées en guidant et en centrant l'instrument de découpe mobile par rapport à l'axe de l'implant notamment par vissage d'une extrémité de celui-ci dans la tête de l'implant.

Un tel procédé, qui nettoie les alentours de la tête de l'implant, dont la gencive, avant reconstitution par greffe, est compliqué et répond de plus à un problème différent.

La présente invention vise à remédier à ces inconvénients.

Pour ce faire elle part notamment de l'idée d'utiliser de façon simple et sans se fixer sur l'implant lui-même (lorsque ce dernier comporte une cavité de connexion avec le pilier) pour centrer la fraise et en même temps éviter de venir toucher l'implant avec la partie taraudante de celle-ci, tout en venant en compression sur ledit implant.

Malgré le fait que la fraise vienne en appui sur l'implant, le praticien observe que celui-ci n'est en fait pas endommagé alors que sa mise en place est grandement facilitée.

Dans ce but la présente invention propose un ensemble comprenant une fraise et au moins un implant, ladite fraise comprenant un corps allongé autour d'un axe, comportant une portion coupante à arêtes hélicoïdales coupantes, une portion d'extrémité montée mobile librement en rotation autour d'un axe par rapport à ladite portion coupante et agencée pour coopérer avec un évidement (ou cavité) de forme complémentaire pratiqué dans la partie supérieure, munie d'une face supérieure, dudit au moins un implant en vis-à-vis,
caractérisé en ce que la portion coupante est agencée pour attaquer la portion crestale osseuse d'une mâchoire,
et en ce que la portion d'extrémité est une portion d'extrémité distale située au bout de la fraise dans le prolongement de ladite portion coupante et agencée pour former une butée axiale et étanche avec ledit implant, ladite portion d'extrémité distale de la fraise et ledit évidement de l'implant étant tels que l'extrémité inférieure de ladite portion à arêtes coupantes est située à une distance déterminée au-dessus de la face supérieure de l'implant, lorsque ladite portion d'extrémité est en butée axiale dans ledit évidement.

Par agencé pour attaquer la portion crestale osseuse on entend présentant notamment un fil de coupe des arêtes de forme et/ou de caractéristiques de tranchant permettant un enlèvement de matière dure (l'os), par exemple en étant dentelée.

Les arêtes hélicoïdales coupantes ne sont donc pas destinées et/ou propres à interagir avec les tissus mous de la gencive qui risqueraient autrement d'être arrachés ou déchiquetés.

Est également décrite une fraise à os cortical comprenant un corps allongé autour d'un axe comportant une portion à arêtes hélicoïdales coupantes d'attaque de la portion crestale d'une mâchoire, la fraise comportant une portion d'extrémité distale agencée pour former butée axiale avec un implant, située dans le prolongement de la portion à arêtes hélicoïdales et montée mobile librement en rotation autour de l'axe par rapport à ladite portion à arêtes hélicoïdales.

Par portion d'extrémité distale on entend une portion située au bout de la fraise, qui constitue donc sa partie la plus extrême au-delà de laquelle il n'y a plus aucune portion de fraise.

De même, le fait d'être en butée, signifie qu'on est en compression.

Dans des modes de réalisation avantageux, on a par ailleurs et/ou de plus recours à l'une et/ou à l'autre des dispositions suivantes :
- la portion d'extrémité est propre à coopérer à frottement et se bloquer en rotation avec ledit évidement de forme au moins en partie complémentaire pour former butée axiale avec ledit implant ;
- la portion d'extrémité distale est en matière plastique biocompatible de dureté shore déterminée, c'est-à-dire au moins égale à celle d'un matériau plastique dur comme du PEEK ;
- la portion d'extrémité distale est en PEEK ;
- la portion d'extrémité distale est tronconique ;
- l'angle de conicité de la portion tronconique de la tête est de l'ordre de 5°. Avantageusement il est supérieur à l'angle du cône d'appui implantaire c'est-à-dire de la cavité de l'implant avec lequel il va être connecté ;
- la portion d'extrémité distale est cylindrique avec épaulement annulaire. L'implant peut alors être à connectique dite « à plat » l'embout ayant ici une forme cylindrique épaulée, dont la butée est formée par le col de l'implant, la partie cylindrique servant à garder la fraise dans l'axe avant d'arriver en butée ;
- la portion d'extrémité distale présente une surface externe lisse ;

Est également décrite une fraise dont la portion d'extrémité distale est agencée pour venir se bloquer en rotation et en butée axiale dans la cavité interne d'une tête d'implant correspondant, avec laquelle elle coopère par exemple à frottement, de raccordement à un pilier de support d'une dent prothétique, la butée axiale s'effectuant à une distance déterminée non nulle de la partie supérieure de la tête d'implant.
L'invention propose également un ensemble dont ledit au moins un implant comprend un corps d'ancrage fileté , par exemple auto-taraudant, allongé autour d'un axe solidaire d'une tête de support d'un élément prothétique, ladite tête comportant un évidement ou une cavité interne ménagée dans sa partie supérieure munie d'une face d'extrémité, ladite cavité interne étant agencée pour recevoir et bloquer en rotation la portion d'extrémité distale de la fraise, ladite portion d'extrémité distale de la fraise et ledit évidement de l'implant étant tels que l'extrémité inférieure de ladite portion à arêtes coupantes est située à une distance déterminée au-dessus de la face supérieure de l'implant, lorsque ladite portion d'extrémité est en butée axiale dans ledit évidement.

Le contact entre l'implant et la partie taraudante de la fraise est ainsi toujours évité.

Cet ensemble permet la mise en œuvre d'un procédé de fraisage de l'os cortical de la crête d'une mâchoire dans lequel, après mise en place d'un implant comprenant un corps d'ancrage fileté allongé autour d'un axe solidaire d'une tête de support d'un élément prothétique, ladite tête comportant un évidement interne ménagé dans sa partie supérieure et présentant une face d'extrémité, on introduit la portion d'extrémité distale mobile en rotation par rapport au reste d'une fraise taraudante, ladite portion d'extrémité distale étant agencée pour se bloquer en rotation et en butée dans l'évidement de l'implant de sorte que la face d'extrémité de l'implant et la partie taraudante de la fraise soit toujours maintenue à distance l'une de l'autre, et on fraise la crête osseuse en maintenant la partie taraudante de la fraise toujours à distance de la face d'extrémité du fait de ladite butée axiale.

L'invention sera mieux comprise à la lecture de la description qui suit de modes de réalisation donnés ci-après à titre d'exemples non limitatifs.
La figure 1 montre une fraise selon un premier mode de réalisation de l'invention en vue latérale et en vue de dessus.
La figure 2 est une vue latérale partielle d'une variante montrant une partie taraudante, une portion d'extrémité distale et sa connectique selon un autre mode de réalisation de l'invention.
Les figures 3A et 3B montrent trois modes de réalisation d'ensembles fraise/implant selon l'invention avec diamètres différents, de face et/ou partiellement en coupe.

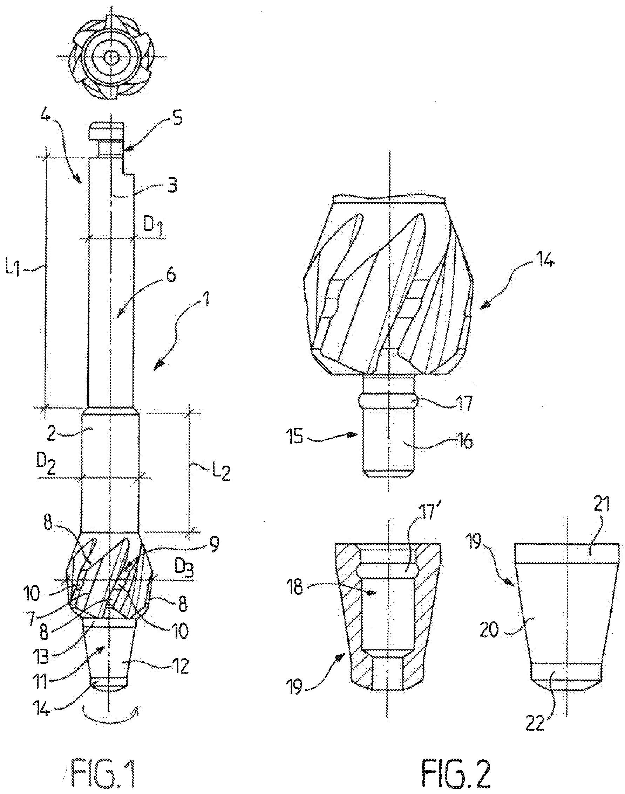

La figure 1 montre une fraise 1 pour os cortical comprenant un corps 2 allongé autour d'un axe 3, par exemple en inox chirurgical. Elle comporte une portion 4 supérieure d'extrémité agencée pour coopérer de façon connue en elle-même avec un outil rotatif (non représenté), par exemple par le biais d'un pan 5 d'indexage et de coopération avec l'outil.

La portion d'extrémité 4 est prolongée par une partie centrale cylindrique 6 présentant un premier diamètre D1 sur une première longueur L1 et un deuxième diamètre D2 (avec D2 > D1) sur une deuxième longueur L2. Cette partie centrale est solidaire d'une portion 7 taraudante (ici en portion de vis hélicoïdales) de diamètre D3 > D2 présentant ici de façon connue en elle-même six ailettes 8 externes réparties angulairement de découpe de l'os.

Chaque ailette présente par exemple des dentelures 9 sur son arête de découpe 10, d'acuité déterminée.

De telles dentelures excluent d'attaquer un tissu mou, qui serait déchiqueté et qui rendrait la fraise inopérante.

Selon le mode de réalisation de l'invention plus particulièrement décrit ici la fraise comporte une portion 11 d'extrémité distale située dans le prolongement de la portion taraudante libre en rotation par rapport à celle-ci.

La portion 11 est par exemple solidaire d'un axe de petit diamètre coopérant à frottement et en rotation à l'intérieur d'une cavité cylindrique de diamètre complémentaire, centrée autour de l'axe et réalisée dans la partie inférieure de la partie taraudante, et muni d'un ergot de blocage empêchant sa sortie de façon connue en elle-même.

La portion 11 est tronconique ou essentiellement tronconique (tronconique sur sa partie centrale 12, et cylindrique sur ses parties d'extrémité 13 et 14).

Sa face externe est lisse, c'est-à-dire notamment non filetée.

L'angle au sommet choisis est avantageusement du type cône morse, et/ou par exemple compris entre 6° et 2°, par exemple 5°.

La portion 11 est en un matériau assez dur (PEEK par exemple) pour éviter l'écrasement et permettre à la fois un bon blocage (par frottement) en rotation lorsqu'il est inséré dans l'implant, tout en autorisant une déconnexion facile lors de l'enlèvement de la fraise.

On a représenté sur la figure 2 un autre mode de réalisation de la partie taraudante 14 de la fraise comprenant ici encore six ailettes hélicoïdales de découpes identiques réparties angulairment.

La portion 15 distale mobile, est ici formée par une partie 16 cylindrique lisse, (notamment sans pas de vis) d'extrémité encliquable par le biais d'un bourrelet 17 au col annulaire 17' dans la cavité 18 représentée schématiquement sur la figure 2, appartenant à une pièce intermédiaire 19 amovible et insérable dans l'implant, tronconique sur sa partie centrale 20 et terminé de part et d'autre par des parties cylindriques d'extrémité 21 et 22.

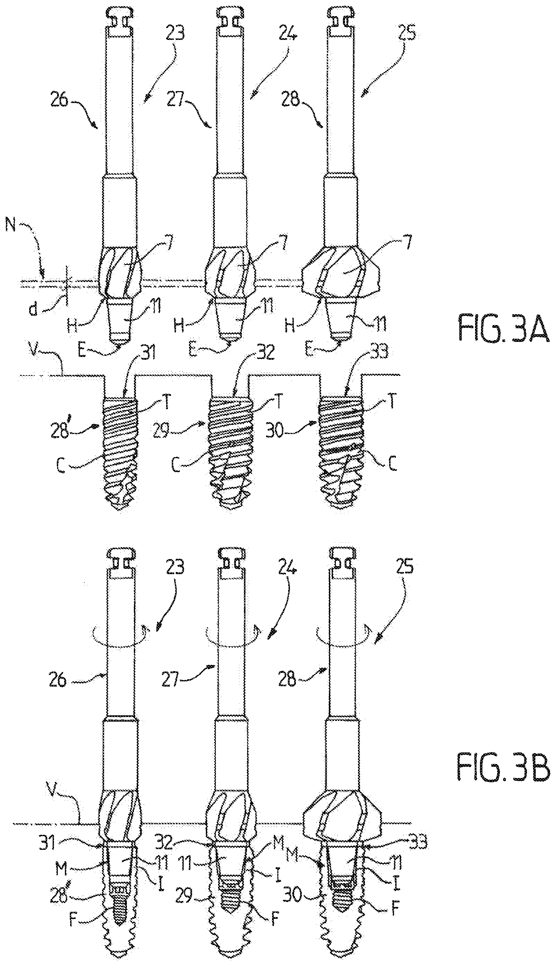

On a représenté sur les figures 3A et 3B, des ensembles fraises/implants 23, 24, 25 selon l'invention, avant connexion figure 3A et après connexion figure 3B pour fraisage de la crête osseuse. Les fraises 26, 27, 28 permettent d'ouvrir l'os cortical sur l'implant en place 28', 29, 30 dans la machoire V.

A titre d'exemple les fraises concernées vont permettre une variation théorique d du niveau N de la crête osseuse, entre 1,5 mm et 2 mm au-dessus de la face d'extrémité supérieure 31, 32, 33 de l'implant concerné, et ce par exemple pour des diamètres D2 de 3,7 mm (fraise 26) ; 4,5 mm (fraise 27) et 7 mm (fraise 28).

Dans la suite du texte on utilisera les mêmes numéros de référence pour désigner des éléments identiques ou similaires.

Dans ces modes de réalisation (cf figure 3B) chaque implant comprend un corps C d'encrage intra osseux pourvu de moyens de raccordement M avec un pilier (non représenté).

Ces moyens de raccordement comprennent une cavité interne I tronconique ménagée dans la partie supérieure de la tête T de l'implant destiné à recevoir par emboîtement la base homothétique du pilier, de façon connue en elle-même.

Comme représenté sur les coupes des figures 3B, les cavités I se prolongent vers le bas par des cavités filetées F destinées à recevoir par vissage l'organe de fixation du pilier de façon connue en elle-même.

On va maintenant décrire en référence aux figures 3A et 3B le procédé de fraisage avec connexion étanche sur l'os selon le mode de réalisation plus particulièrement décrit.

Lorsque un chirurgien-dentiste doit venir mettre en place un pilier sur un implant avec cavité centrale du type décrit ci-avant, il prépare la connexion de façon à ce que la crête osseuse soit évasée de façon adéquate.

Par exemple pour mettre en place une prothèse avec implant de diamètre 4 mm, il va percer un orifice de 3,5 mm, puis visser l'implant, par exemple auto taraudant, avant de fixer dessus par vissage de façon connue une prothèse de diamètre 5. Afin de permettre une connectique étanche, il utilise alors une fraise selon l'invention, en retouchant de quelques dixièmes de millimètres l'os crétal.

Pour ce faire il vient donc introduire après mise en place de l'implant 28', 29, 30 dans la mâchoire V, la portion d'extrémité distale 11 en pointe à l'intérieur de la cavité interne I de la tête de l'implant, et ce en ménageant une bonne étanchéité au niveau de la jonction entre la cavité interne et la portion d'extrémité distale.

Une fois que celle-ci est en butée axiale sur l'implant, ce qui indique d'une part que l'étanchéité est obtenue et d'autre part que la face d'extrémité 31, 32, 33 de l'implant est située à une distance déterminée d suffisante pour éviter tout contact, par exemple 1,5 mm de l'extrémité inférieure H de la portion 7 taraudante, on vient connecter la fraise à l'outil tournant et on réalise l'écrêtage, la fraise étant d'une part parfaitement guidée, puisqu'elle est centrée axialement par l'intermédiaire de sa portion 11 d'extrémité distale et d'autre part maintenue à distance de façon étanche de l'implant puisque la butée de l'extrémité E du cône 11 dans la cavité I et/ou un épaulement interne à celle-ci, permet de limiter l'écrètage sans risquer de toucher l'implant et donc de l'abimer.

Il est ainsi avantageusement évité toute projection et/ou introduction de débris dans la cavité interne de l'implant lors dudit écrètage.

Un avantage inattendu est en effet et également de préserver la cavité de toute partie de débris d'os qui pourraient ici s'immiscer suite au fraisage réalisé.

Une fois celui-ci terminé on enlève la fraise et on peut continuer la mise en place des autres éléments nécessaires.

## Revendications

1. Ensemble comprenant une fraise (1, 26, 27, 28) et au moins un implant (28', 29,30), ladite fraise comprenant un corps (2) allongé autour d'un axe (3) comportant une portion (7) coupante à arêtes hélicoïdales coupantes, une portion (11) d'extrémité montée mobile librement en rotation autour de l'axe par rapport à ladite portion coupante et agencée pour coopérer avec un évidement de forme complémentaire pratiqué dans la partie supérieure, munie d'une face supérieure, dudit au moins un implant en vis-à-vis, **caractérisé en ce que** la portion coupante est agencée pour attaquer la portion crestale osseuse d'une mâchoire et **en ce que** la portion d'extrémité (11) est une portion d'extrémité distale située au bout de la fraise dans le prolongement de ladite portion coupante et agencée pour former une butée axiale et étanche avec ledit implant, ladite portion d'extrémité distale de la fraise et ledit évidement de l'implant étant tels que l'extrémité inférieure de ladite portion à arêtes coupantes est située à une distance déterminée au-dessus de la face supérieure de l'implant, lorsque ladite portion d'extrémité est en butée axiale dans ledit évidement.

2. Ensemble selon la revendication 1, **caractérisé en ce que** la portion d'extrémité est propre à coopérer à frottement et se bloquer en rotation avec ledit évidement de forme au moins en partie complémentaire pour former butée axiale avec ledit implant.

3. Ensemble selon l'une quelconque des revendications précédentes, **caractérisé en ce que** la portion (11) d'extrémité distale est en matière plastique biocompatible de dureté shore déterminée.

4. Ensemble selon la revendication 3, **caractérisé en ce que** la portion (11) d'extrémité distale est en PEEK.

5. Ensemble selon l'une quelconque des revendications précédentes, **caractérisée en ce que** la portion (11) d'extrémité distale est tronconique.

6. Ensemble selon la revendication 5, **caractérisé en ce que** l'angle de conicité de la portion (11) tronconique de la tête est de l'ordre de 5°.

7. Ensemble selon l'une quelconque des revendications 1 à 4, **caractérisé en ce que** la portion (11) d'extrémité distale est cylindrique avec épaulement annulaire.

8. Ensemble selon l'une quelconque des revendications précédentes, **caractérisé en ce que** la portion (11) d'extrémité distale présente une surface externe lisse.

9. Ensemble selon l'une quelconque des revendications précédentes dépendantes de la revendication 2, **caractérisé en ce que** ledit au moins un implant (28', 29, 30) comprend un corps (C) d'ancrage fileté allongé autour d'un axe solidaire d'une tête (T) de support d'un élément prothétique, ladite tête comportant ledit évidement interne (I) ménagé dans sa partie supérieure munie d'une face d'extrémité, ledit évidement interne étant agencé pour recevoir et bloquer en rotation la portion d'extrémité distale de la fraise, ladite portion d'extrémité distale de la fraise et ledit évidement de l'implant étant tels que l'extrémité inférieure de ladite portion à arêtes coupantes est située à une distance déterminée au-dessus de la face supérieure de l'implant, lorsque ladite portion d'extrémité est en butée axiale dans ledit évidement.

## Patentansprüche

1. Anordnung aus einem Fräser (1, 26, 27, 28) und mindestens einem Implantat (28', 29, 30), wobei der Fräser einen sich um eine Achse (3) erstreckenden Körper (2) umfasst mit einem schneidenden Abschnitt (7) mit spiralförmigen Schneidkanten, einen Endabschnitt (11), der frei drehbeweglich um die Achse relativ zu dem schneidenden Abschnitt montiert und angeordnet ist, um mit einer komplementär ausgebildeten Ausnehmung zusammenzuwirken, die in dem oberen mit einer Oberseite versehenen Bereich des mindestens einen gegenüberliegenden Implantats gebildet ist,
**dadurch gekennzeichnet,**
**dass** der schneidende Abschnitt angeordnet ist, um den krestalen Knochenabschnitt eines Kiefers anzugreifen, und dass der Endabschnitt (11) ein distaler Endabschnitt ist, der am Ende des Fräsers in der Verlängerung des schneidenden Abschnitts befindlich ist und angeordnet ist, um mit dem Implantat einen axialen und dichten Widerlager zu bilden, wobei der distale Endabschnitt des Fräsers und die Ausnehmung des Implantats derart sind,
**dass** das untere Ende des Abschnitts mit Schneidkanten sich in einem bestimmten Abstand über der Oberseite des Implantats befindet, wenn der Endabschnitt sich in der Ausnehmung axial am Widerlager befindet.

2. Anordnung nach Anspruch 1,
**dadurch gekennzeichnet,**
**dass** der Endabschnitt geeignet ist, mit der zumindest teilweise komplementär ausgebildeten Ausnehmung reibungsschlüssig in Eingriff zu kommen und mit ihr verdrehfest zu werden, um mit dem Implantat einen axialen Widerlager zu bilden.

3. Anordnung nach einem der vorhergehenden Ansprüche,
**dadurch gekennzeichnet,**
**dass** der distale Endabschnitt (11) aus einem biokompatiblen Kunststoff mit einer bestimmten Shore-Härte besteht.

4. Anordnung nach Anspruch 3,
**dadurch gekennzeichnet,**
**dass** der distale Endabschnitt (11) aus PEEK besteht.

5. Anordnung nach einem der vorhergehenden Ansprüche,
**dadurch gekennzeichnet,**
**dass** der distale Endabschnitt (11) kegelstumpfförmig ist.

6. Anordnung nach Anspruch 5,
**dadurch gekennzeichnet,**
**dass** der Kegelwinkel des kegelstumpfförmigen Abschnitts (11) des Kopfes in der Größenordnung von 5° liegt.

7. Anordnung nach einem der Ansprüche 1 bis 4,
**dadurch gekennzeichnet,**
**dass** der distale Endabschnitt (11) zylindrisch mit einem ringförmigen Absatz ist.

8. Anordnung nach einem der vorhergehenden Ansprüche,
**dadurch gekennzeichnet,**
**dass** der distale Endabschnitt (11) eine glatte Außenoberfläche aufweist.

9. Anordnung nach einem der vorhergehenden von Anspruch 2 abhängigen Ansprüche,
**dadurch gekennzeichnet,**
**dass** das mindestens eine Implantat (28', 29, 30) einen Verankerungsgewindekörper (C) umfasst, der sich um eine Achse erstreckt, die mit einem Stützkopf (T) eines prothetischen Elements fest verbunden ist, wobei der Kopf eine interne Ausnehmung (I) aufweist, die in seinem mit einer Endfläche versehenen oberen Bereich gebildet ist, wobei die interne Ausnehmung angeordnet ist, um den distalen Endabschnitt des Fräsers aufzunehmen und verdrehfest zu machen, wobei der distale Endabschnitt des Fräsers und die Ausnehmung des Implantats derart sind,
**dass** das untere Ende des Abschnitts mit Schneidkanten sich in einem bestimmten Abstand über der Oberseite des Implantats befindet, wenn der Endabschnitt sich in der Ausnehmung axial am Widerlager befindet.

## Claims

1. Assembly comprising a drill (1, 26, 27, 28) and at least one implant (28', 29, 30), said drill comprising an elongate body (2) about an axis (3) comprising a cutting portion (7) with helical cutting edges, an end portion (11) mounted so as to be freely rotatable about the axis relative to said cutting portion and arranged to cooperate with a recess of complementary shape formed in the upper part, provided with an upper face, of said at least one opposite implant, **characterised in that** the cutting portion is arranged to attack the bony crestal portion of a jaw and **in that** the end portion (11) is a distal end portion situated at the end of the drill as an extension of said cutting portion and arranged to form a sealed axial abutment with said implant, said distal end portion of the drill and said recess of the implant being such that the lower end of said portion with cutting edges is situated at a given distance above the upper face of the implant, when said end portion is in axial abutment in said recess.

2. Assembly according to claim 1, **characterised in that** the end portion is suitable for cooperating frictionally and locking rotationally with said recess of at least partially complementary shape in order to form an axial abutment with said implant.

3. Assembly according to any one of the preceding claims, **characterised in that** the distal end portion (11) is made of biocompatible plastic material having a given Shore hardness.

4. Assembly according to claim 3, **characterised in that** the distal end portion (11) is made of PEEK.

5. Assembly according to any one of the preceding claims, **characterised in that** the distal end portion (11) is frustoconical.

6. Assembly according to claim 5, **characterised in that** the cone angle of the frustoconical portion (11) of the head is of the order of 5°.

7. Assembly according to any one of claims 1 to 4, **characterised in that** the distal end portion (11) is cylindrical with an annular shoulder.

8. Assembly according to any one of the preceding claims, **characterised in that** the distal end portion (11) has a smooth outer surface.

9. Assembly according to any one of the preceding claims dependent on claim 2, **characterised in that** said at least one implant (28', 29, 30) comprises an elongate threaded anchor body (C) about an axis integral with a support head (T) for a prosthetic element, said head comprising said inner recess (I) formed in its upper part provided with an end face, said inner recess being arranged to receive and lock rotationally the distal end portion of the drill, said distal end portion of the drill and said recess in the implant being such that the lower end of said portion with cutting edges is situated at a given distance above the upper face of the implant, when said end portion is in axial abutment in said recess.
